# EUROPEAN PATENT APPLICATION

(11) **EP 3 657 158 A1**
(43) Date of publication of application: **27.05.2020**
(21) Application number: 20152265.3
(22) Date of filing: 25.02.2011
(51) Int. Cl.: G01N 23/09, G01V 5/00

(54) **SYSTEMS AND METHODS FOR DETECTING NUCLEAR MATERIAL**

(30) Priority: 25.02.2010 US 30825410 P; 12.03.2010 US 31320010 P
(62) Divisional of application: 11787050.1
(71) Applicant: Rapiscan Systems, Inc., Torrance, CA 90503 (US)
(72) Inventor: GOZANI, Tsahi, Palo Alto, CA California 94301 (US); KING, Michael Joseph, Hillsborough, CA California 94010 (US); SHAW, Timothy John, Oakland, CA California 94606 (US); STEVENSON, John David, Livermore, CA California 94550 (US)
(74) Representative: Barker Brettell LLP

(57) **Abstract**

An inspection system for measuring a plurality of fission signatures comprising a radiation source, wherein said radiation source produces radiation directed towards an object under inspection and induces fission in any nuclear material that may be present in the object; and a threshold-activation detector, comprising at least one threshold-activation material wherein said threshold-activation material is also a scintillant and at least one detector for detecting beta radiation resulting from activation of the threshold-activation material by prompt fission neutrons.

## Description

### CROSS-REFERENCE TO RELATED APPLICATIONS

The present specification relies on U.S. Provisional Patent Application No. 61/308,254, filed on February 25, 2010, for priority, and is hereby incorporated by reference in its entirety. Further, the present specification also relies on U.S. Provisional Patent Application No. 61/313,200, filed on March 12, 2010, for priority, and is hereby incorporated by reference in its entirety.

### FIELD OF THE INVENTION

The present invention is directed towards systems and methods for detecting nuclear material and, specifically, for detecting nuclear material in cargo, trucks, containers, or other structures using multiple stimulating-radiation and fission signatures. More specifically, the present invention incorporates the detection of nuclear material by measuring prompt neutrons released from fission events induced in the nuclear material by radiation probes.

### BACKGROUND OF THE INVENTION

The threat of nuclear-material and nuclear-device smuggling requires a fast and reliable non-intrusive inspection of all types of conveyances, such as containers and cargo at sea and airports or trucks at land ports of entry. Detection of the spontaneous emission of radiation from nuclear material has known limitations, which can be overcome by using active interrogation. Active interrogation typically employs narrow or wide beams of penetrating probes such as neutrons or X-rays (stimulation radiation) to stimulate fissions in the nuclear material, if present.

Conventionally, nuclear material is detected by exposing a container to radiation, such as X-ray radiation or neutrons, and inducing fission by interaction of the radiation with the nuclear material, referred to as photo-fission or neutron fission, respectively. The fission process causes the nuclear material to emit multiple penetrating signatures such as Prompt Neutrons, Delayed Neutrons, Prompt gamma rays and Delayed-gamma rays. In the past, most system were designed to detect fission events by detecting the delayed-neutron signature using detector arrays positioned external to the irradiated container. The detection of fission-related delayed neutrons is a very strong indication that nuclear material is present. Delayed neutrons, however, while a unique indicator of the fission occurrence, are very few and of low energy, thereby severely reducing the efficacy of the inspection system especially for hydrogenous cargo. In some instances, the sole fission signature measured is that due to the delayed-gamma rays. This signature can be highly attenuated in metallic cargos. In these cases, it is much more desirable to detect fission prompt neutrons, which are more abundant and penetrating. However, the fission prompt neutrons are produced at virtually the same time as the far more numerous probing radiation types (stimulation radiation) incident on the nuclear material blinding all detectors. Generally, by the time the detectors recover, no prompt-neutron signature exists.

Accordingly, there is need for improved methods and systems for detecting nuclear material that do not depend solely on one signature, but on multiple signatures where the vulnerabilities of one signature are mitigated by the strength of the others. Similarly, multiple probing radiation types, such as X-rays and neutrons used separately or in tandem make the inspection system far more sensitive to concealed nuclear material over the wide range of cargoes encountered in commerce.

### SUMMARY OF THE INVENTION

The present specification discloses a system for measuring a plurality of fission signatures, comprising a radiation source, wherein said radiation source is configured to produce radiation and direct said radiation towards an object under inspection, wherein said radiation induces fission in any nuclear material that may be present in the object; a first detector wherein said first detector type is at least one of a threshold-activation detector, a plastic scintillator detector, a moderated He-3 detector, or a He-3 equivalent replacement detector; and a second detector wherein said second detector type is at least one of a threshold-activation detector, a plastic scintillator detector, a moderated He-3 detector, or a He-3 equivalent replacement detector.

Optionally, the first detector and said second detector are positioned on opposing sides of the object. One of said first detector or said second detector is positioned to detect radiation that is emitted from the object at back angles relative to the radiation produced by the radiation source. The first detector is positioned above the object. The second detector is positioned on a side of the object. The first detector is positioned below the object. The second detector is positioned on a side of the object.

Optionally, the radiation source is a linac having an energy in the range of 6 MeV to 9 MeV. The system further comprises a neutron-inducing material positioned between the radiation source and the object, wherein said neutron-inducing material converts some of the radiation emanating from the radiation source into a neutron source. The neutron source has an energy of approximately 2.5 MeV. The neutron-inducing material is heavy water or beryllium. The radiation is at least one of X-rays, monoenergetic gamma rays, or gamma rays with a narrow energy band. The threshold-activation detector comprises at least one neutron threshold-activation material for detecting higher energy prompt fission neutrons. At least one neutron threshold-activation material includes at least one fluorine-containing compound. The plurality of fission signatures includes at least one of fission prompt neutrons, delayed-gamma rays, or delayed neutrons. The system further comprises an X-ray radiation source and transmission detectors for interrogating the object with X-rays and detecting X-rays transmitted through the object.

In another embodiment, the inspection system measures a plurality of fission signatures using a radiation source, wherein said radiation source produces radiation directed towards an object under inspection and induces fission in any nuclear material that may be present in the object; and a threshold-activation detector, comprising at least one threshold-activation material wherein said threshold-activation material is also a scintillant and at least one detector for detecting beta radiation resulting from activation of the threshold-activation material by prompt fission neutrons.

Optionally, the threshold-activation material or scintillant comprises fluorine-containing compounds. The fluorine-containing compounds comprise a liquid fluorocarbon. The threshold-activation detector comprises a plurality of detector tiles, wherein said plurality of detector tiles is configured in combination to function as a large area detector. The threshold-activation detector comprises one large area detector.

The aforementioned and other embodiments of the present shall be described in greater depth in the drawings and detailed description provided below.

### BRIEF DESCRIPTION OF THE DRAWINGS

These and other features and advantages of the present invention will be further appreciated, as they become better understood by reference to the detailed description when considered in connection with the accompanying drawings:
FIG. 1 is a block diagram illustration of one embodiment of the nuclear detection system of the present invention;
FIG. 2A is an illustration of an external detection threshold-activation detector with an activating substance and a separate gamma ray detector;
FIG. 2B is an illustration of a self-detection threshold-activation detector in which the activating substance is also a scintillant;
FIG. 2C shows a fabricated, cylindrical Fluorine-based TAD, where the scintillator is also the activation substance, viewed by two 5-inch x 10-inch photomultipliers;
FIG. 2D shows a fabricated single "tile" of fluorine-based threshold-activation detector, used in the inspection system of the present invention, having dimensions of 40 cm x 40 cm x 20 cm;
FIG. 2E is a schematic illustration of an exemplary inspection system employing the threshold-activation detectors (TAD) of the present invention;
FIG. 2F is a graph showing the beta-ray spectrum induced by fission neutrons from a ²⁵²Cf source;
FIG. 2G is a graphical illustration of a Fluorine-based TAD, showing a typical energy spectrum for the fluorocarbon detector after irradiation of uranium with a photo-fission source;
FIG. 2H is a table showing exemplary isotopes that can be employed with the threshold-activation detectors of the present invention;
FIG. 3 is a chart showing a plurality of parameters associated with embodiments of the present invention;
FIG. 4A is a schematic illustration showing a scanning system in which the X-ray photo-fission multiple signature-based system of the present invention is implemented;
FIG. 4B is a three-dimensional illustration showing a scanning system in which the x-ray photo-fission multiple signature-based system of the present invention is implemented; and
FIG. 5 is a three-dimensional diagram showing a scanning system with the multiple signature detection of the present invention implemented in a combined and simultaneous photo-neutron/X-ray photo-fission inspection system.

### DETAILED DESCRIPTION OF THE INVENTION

The present invention is directed towards multiple embodiments of system to detect nuclear material based on at least one source of probing radiation and a plurality of radiation signatures. The following disclosure is provided in order to enable a person having ordinary skill in the art to practice the invention. Language used in this specification should not be interpreted as a general disavowal of any one specific embodiment or used to limit the claims beyond the meaning of the terms used therein. The general principles defined herein may be applied to other embodiments and applications without departing from the spirit and scope of the invention. Also, the terminology and phraseology used is for the purpose of describing exemplary embodiments and should not be considered limiting. Thus, the present invention is to be accorded the widest scope encompassing numerous alternatives, modifications and equivalents consistent with the principles and features disclosed. For purpose of clarity, details relating to technical material that is known in the technical fields related to the invention have not been described in detail so as not to unnecessarily obscure the present invention.

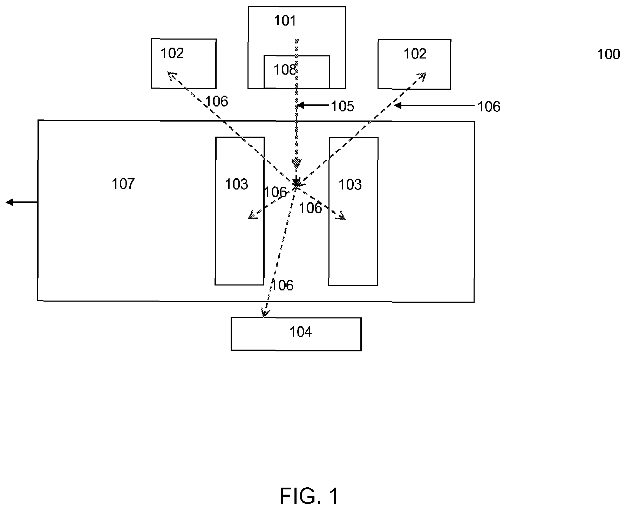

As shown in FIG. 1, in one embodiment, the X-ray inspection system 100 of the present invention comprises a high energy X-ray source 101, such as an electron linear accelerator (linac) typically with energies of 6 to 9 MeV. Persons of ordinary skill in the art should note that the higher the energy of the source, the more sensitive to nuclear material the system 100 becomes. Further, the source includes appropriate shielding and collimation, depending upon the nature of the source, as is well-known to those of ordinary skill in the art. Probing radiation 105 emanating from source 101 and directed towards object 107 induces fission via the photo-fission process in any nuclear material that may be present in object 107. In one embodiment, object 107 is a stationary or moving inspection object such as a truck, shipping container, cargo container and the like.

In another embodiment, a fast-neutron probe and X-ray probe are integrated to improve detection sensitivity across all types of cargo. X-rays penetrate very well into organic or hydrogenous material (e.g., food, wood, and plastic etc.) and less well into dense metallic cargo. On the other hand, fast neutrons penetrate well into metallic cargo but less well into hydrogenous cargo. Therefore, by combining these two different probing sources, fast neutrons and X-rays, and simultaneously or sequentially inspecting the same conveyance using these two different sources, the inspection system of the present invention can achieve high sensitivity across all types of cargos.

Persons of ordinary skill in the art should appreciate that neutrons can be generated by the well-known photo-nuclear reaction of high energy X-rays with materials having a low energy threshold for the photo-neutron reaction, such as heavy water (which is water where the hydrogen is replaced by its naturally occurring isotope, deuterium), beryllium, or any other suitable materials known in the art.

Referring back to FIG. 1, in one embodiment, a neutron-converting or inducing material 108 surrounds, is proximate to, adjacent to or otherwise positioned in front of X-ray source 101 (at the X-ray target element, such as tungsten - where the intensity is the highest), as a result of which a small fraction of the X-rays are converted into an intense neutron source (in excess of 10¹¹ n/s for 100µAmp 9 MeV electron linac) with most of the neutrons having energy less than 3 MeV. This enables simultaneous interrogation of cargo 107 with two highly complementary irradiation probes: X-rays and fast neutrons, using the same source of radiation (such as a commercial electron linac, as described in detail above).

The X-ray system 100 further comprises detector arrays 102, 103, 104, which in one embodiment are located around three sides (in front, behind, or on top) of the inspected object 107. In one embodiment, detector arrays 102 are positioned proximate to radiation source 101 and detect any radiation that is emitted from the object at back angles relative to the probing beam. In one embodiment, detectors 102 are located adjacent to and on lateral sides of radiation source 101. In one embodiment, detector arrays 103 are positioned above or below the object under inspection. In one embodiment, detector arrays 104 are positioned on the opposite side of the object as the source and serve to detect radiation emitted in the forward angles relative to the probing beam direction. Therefore, once radiation 105 is directed towards container 107, if nuclear materials are present, then the resultant fission prompt neutrons, delayed-gamma rays and delayed neutrons 106 pass through and can be detected by the detector arrays 102, 103, and 104.

In one embodiment, the detector arrays 102, 103, 104 comprise neutron threshold-activation materials that are used to detect the higher energy, more penetrating neutrons, which are much more prolific than delayed-neutron fission signatures well after the fission process and any overload resulting from the blinding X-ray source.

In one embodiment, neutron threshold-activation materials include, but are not limited to fluorine-containing compounds, which are activated by fission neutrons (with an energy above 3 MeV in the case of fluorine) producing a short-lived radioactive material (nitrogen-16, an isotope of nitrogen with a half life of 7.1s in the case of fluorine) that decays by emitting beta particles every time and often gamma rays (as is the case with fluorine) which can be detected by an appropriate detector, such as the unique threshold-activation detector described in United States Provisional Patent Application Number 61/313,200, by the Applicant of the present invention, which is herein incorporated by reference in its entirety. The fluorocarbon threshold-activation detector employed in the preferred embodiment is also an efficient gamma ray detector and thus, also detects the fission delayed-gamma rays.

In another embodiment, the detector arrays 102, 103, and 104 optionally include some lower cost plastic scintillator detectors which detect only fission delayed-gamma rays.

In another embodiment, the detector arrays 102, 103, and 104 optionally include moderated He-3 detectors or an equivalent replacement. One such embodiment of a suitable detector is described in co-pending United States Patent Application Number 12/976,861, which is also assigned to the Application of the present invention and herein incorporated by reference in its entirety.

It should be noted herein that the detector arrays 102, 103, 104 comprise at least one of and in some embodiments, a combination of, plastic scintillator detectors, fluorocarbon detectors, moderated He-3 detectors or He-3 equivalent replacements or any other detector suitable for the present invention depending upon the source and detection requirements.

The use of a threshold-activation detector (TAD) is advantageous because of its ability to detect prompt neutrons, via the activation, well after the source's blinding radiation has stopped. A typical pulsed source (e.g. of X-ray or neutrons) can be from a few microseconds to milliseconds wide, having a repetition rate of a few times per second to hundred or thousand times per second. The times between pulses afford enough time for the detectors to recover from the overload that may occur during the pulse and to collect an ample activation signal. The activation materials of the TAD are selected to have half lives ranging from a second to tens of seconds. The activation material is also selected to have a higher energy threshold so they will be activated only by the neutrons of interest (e.g. the higher energy fission prompt neutrons) and not by the numerous lower energy neutrons that originate directly or indirectly from the source. The TAD system allows the measurement to be conducted in situ or to quickly transfer the activated material to a location where the background is very low further increasing the sensitivity of detection.

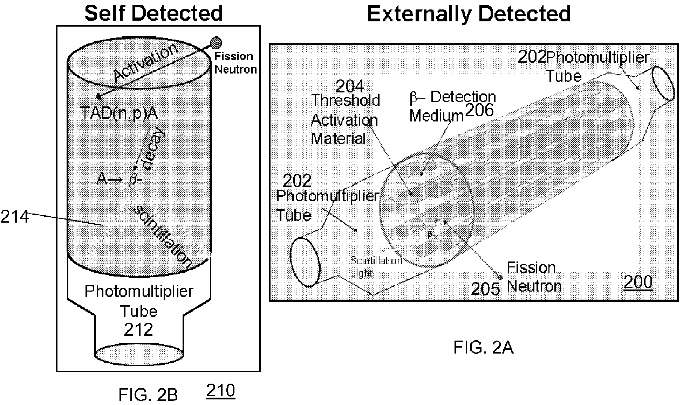

In one embodiment the threshold-activation detector (TAD) is an activating substance (such as, but not limited to Teflon) with a separate gamma ray detector (such as NaI scintillation detectors which is usually employed to detect, between beam pulses, the thermal-neutron-capture gamma rays) for detecting the gamma-rays emitted by the activated material. Referring now to FIG. 2A, in an externally detected configuration, the threshold-activation detector 200 of the present invention comprises at least one threshold-activation material "rod" 204 immersed, for example, in a scintillator substance 206 viewed by one or more photomultipliers 202 for detecting the beta-radiation 207 resulting from the activation of the threshold-activation material/TAD 204 by prompt fission neutrons 205.

In another embodiment, the activating substance is also a scintillant, such as, but not limited to certain liquid fluorocarbons (C₆F₆), BaF₂, CaF₂, thus allowing the detection of the beta activity with close to 100% efficiency and also the gamma-rays, but with lower efficiency, depending on the size of the detector. Referring now to FIG. 2B, in a self-detected configuration, the threshold-activation detector 210 of the present invention comprises a photomultiplier tube 212 for housing a scintillant 214 that is capable of detecting both beta activity and gamma-rays. Thus, in one embodiment, the threshold-activation detector employs a fluorocarbon scintillation counter and the prompt neutrons activate the detector material itself. The activation products emit beta particles with a 7.1-second half-life and are detected with a very high efficiency well after the blinding radiation of the radiation probe is over.

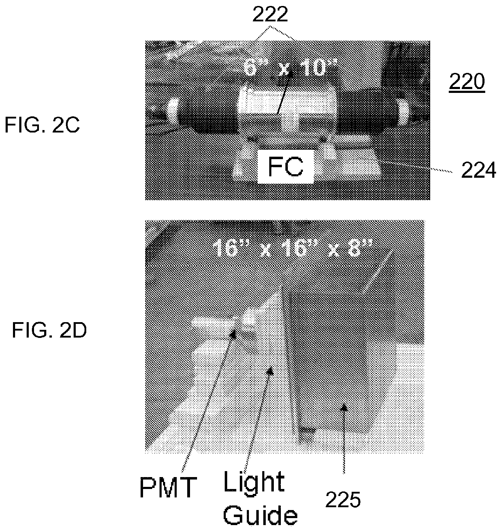

FIG. 2C shows a fabricated, cylindrical Fluorine-based TAD 220, where the scintillator is also the activation substance, viewed by two 5-inch x 10-inch photomultipliers 222 on a wooden crate 224.

FIG. 2D shows a fabricated, single "tile" 225 of a fluorine-based threshold-activation detector, used in the inspection system of the present invention, having dimensions of 40 cm x 40 cm x 20 cm, which in one embodiment, can be made into a sufficiently large area detector (covering, for example, more than 2.56 m²) comprising 16 "tiles" 225 to ensure high detector efficiency, thereby further increasing detection sensitivity and measurement speed. In another embodiment, detector "tiles" 225 can also comprise lower-cost plastic scintillator of the same size.

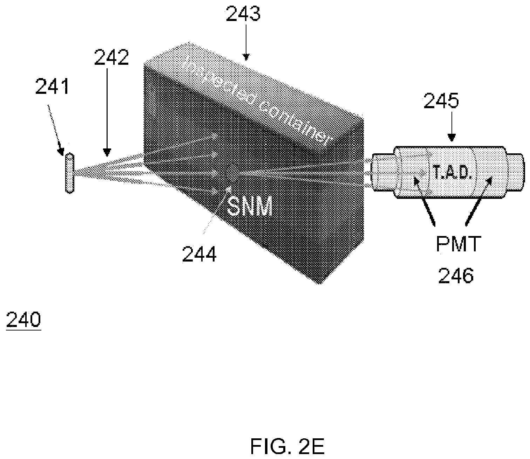

FIG. 2E is a schematic illustration of an exemplary inspection system employing the threshold-activation detectors (TAD) of the present invention. As shown in FIG. 2E, the exemplary inspection system 240 comprises an interrogation source 241 and a fission fast neutron detector 245, which in one embodiment, is a threshold-activation detector (TAD). The interrogation source 241 produces interrogation radiation 242. In one embodiment, the interrogation radiation 242 is a radiation comprising neutrons mostly having energy of ≤ 3 MeV. In another embodiment, the interrogation radiation 242 is a radiation comprising X-rays having energy of ≤ 9.0 MeV. In yet another embodiment, the interrogation radiation 242 comprises both neutrons mostly having energy of ≤ 3 MeV and X-rays having energy of ≤ 9.0 MeV. The interrogation radiation is directed towards a container 243, which may or may not contain nuclear material 244. Once interrogation radiation 242 is directed towards container 243, if nuclear materials 244 are present, then the resultant fission prompt neutrons pass through and are detected by TAD 245, viewed by two photomultipliers 246. In one embodiment when the TAD material is also a scintillant such as the fluorocarbon liquid scintillator detector, the same detector array used for detecting prompt neutrons is used to also detect delayed gamma rays. The prompt neutron and gamma ray signatures are distinguished by way of their measured energy spectrum.

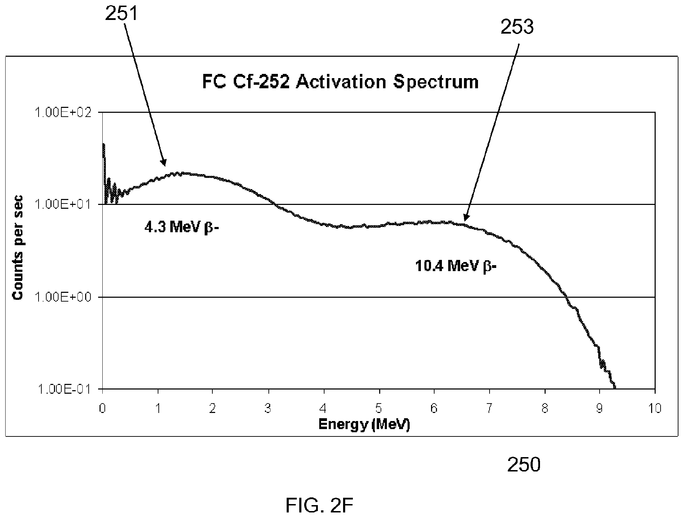

FIG. 2F is a graph showing the beta-ray spectrum induced by fission neutrons from a ²⁵²Cf source. The exemplary spectrum 250 was obtained by repeating 10s exposures of the fluorocarbon detector to a ²⁵²Cf source followed by a 10s measurement while the source is inactive. The two broad bulges 251, 253 in the spectrum 250 in FIG. 2F primarily represent the superimposition of the two beta energy spectra having an endpoint energy of 4.3 and 10.4 MeV, respectively.

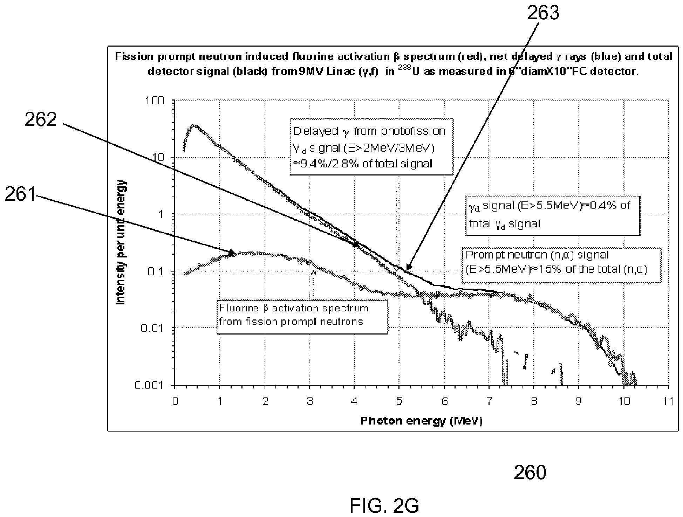

FIG. 2G shows the actual measurement of the response of Fluorine-based TAD to photo-fission induced by a 9MeV x-ray linac in uraniun 263. Also shown are the prompt-neutron activation beta decay energy spectrum 261 for the fluorocarbon detector after irradiation with a fission source, similar to spectrum 250 shown in FIG. 2F. The liquid fluorocarbon detector utilizes the ¹⁹F(n,α)¹⁶N reaction. When a fast neutron interacts with fluorine, an alpha particle and an excited ¹⁶N atom are produced. Referring back to FIG. 2F, ¹⁶N decays with a 7.1s half-life and produces two high-energy beta- spectra 251, 253 (4.3MeV 67% of the time and 10.4 MeV 28% of the time) and a 6.1 MeV gamma-ray 67% of the time, which are all readily detectable.

Referring back to FIG. 2G, spectrum 263 contains a contribution from the broad Compton scattering spectrum of the 6.1 MeV gamma rays and 4.84 MeV beta particles from the ¹⁹F(n,p)¹⁹O reaction..

The exponentially declining energy spectrum of the delayed fission gamma rays is also shown, 262. It is measured along with the ¹⁹F(n,α) activation between the 9MV linac pulses. In this mode of operation, the linac is pulsed 20 to 100 pulses per second; each pulse is typically 2-4 µs wide. The fission delayed-gamma rays and the fluorine activation of the fluorocarbon detector itself is collected between the pulses.

The combined, observed spectrum from fission in uranium in fluorocarbon is shown by curve 263, and it is the sum of the delayed-gamma ray spectrum, shown as curve 262 and the prompt-neutron activation spectrum, shown as curve 261. Curve 263 is an exponentially declining spectrum with a broad bulge commencing at about 5.5. MeV and ending at about 10.4 MeV. When the "double-bulge" ²⁵²Cf spectrum is normalized to the former spectrum above 7 MeV and subtracted from the latter, the difference is the exponentially declining spectrum representing typical fission delayed-gamma ray spectrum 262. The fraction of the delayed-gamma ray spectrum above 5.5 MeV is very small (approximately 0.4%), whereas that of prompt-neutron fluorine activation is quite substantial. The spectrum above 5 MeV is virtually dominated by the prompt-neutron activation allowing for the determination of the two signatures employing one detector type.

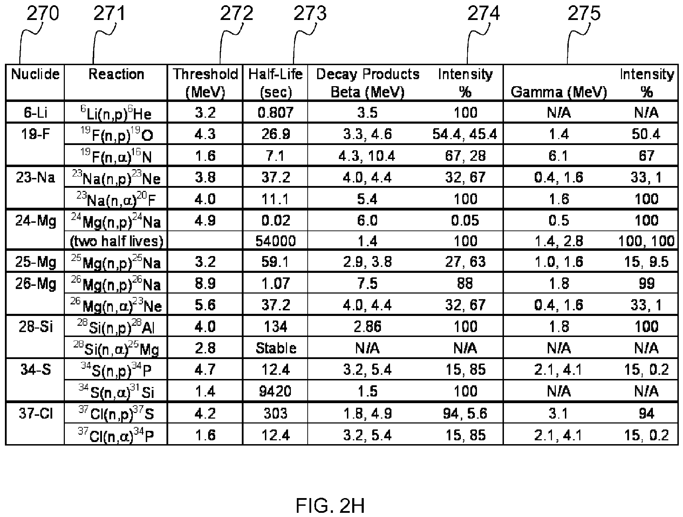

FIG. 2H is a table showing exemplary isotopes 270 that can be employed as threshold-activation detectors of the present invention. In addition, the table shows the specific activation reactions 271 of each isotope 270, along with the threshold-activation energy 272 (in MeV), the half-life of the isotope 273, the energies of the beta decay products and their respective intensities 274, and the gamma rays produced and their respective intensities 275.

It should be appreciated by those of ordinary skill in the art that detection of multiple fission signatures using the unique detector system ensures that the high complementarity (in terms of penetration) of the irradiation probes (fast neutrons and high energy X-rays) is fully utilized, in accordance with an aspect of the present invention. It should further be appreciated that applying fast neutrons, if appropriately pulsed, affords the use of the extremely high sensitivity of the Differential Die Away Analysis (DDAA) - or the detection of prompt neutrons resulting from thermal-neutron fission only in fissile isotopes (e.g., U-235, Pu-239, U-233). DDAA can be employed with a very high efficiency when fissions are induced by thermalized source neutrons in the SNM. The thermalization process is fast, where the resultant thermal neutrons very efficiently stimulate fissions for hundreds of microseconds, only in SNM if they are present. The high energy fission neutrons produced by the thermal neutrons can be detected with high efficiency cadmium-covered detectors containing ³He proportional counters or other alternative detectors based on ¹⁰B or ⁶Li.

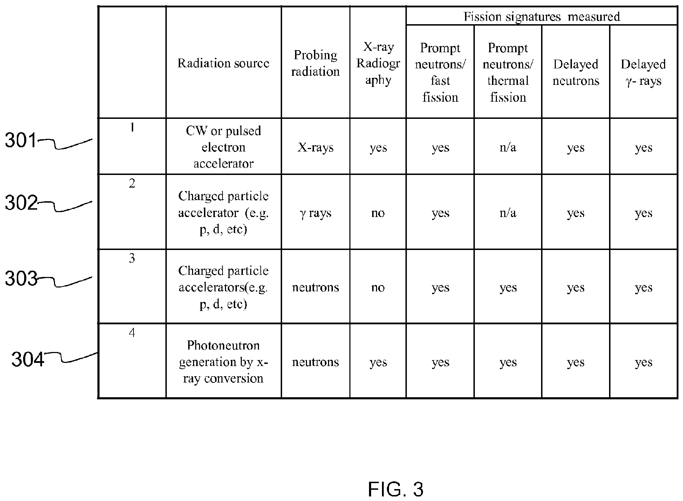

FIG. 3 is a chart showing a plurality of parameters 300 associated with embodiments of the present invention. In a first embodiment, shown in row 301, the system uses, as the irradiation probe, x-rays for high resolution radiography and to induce fission events whose signatures can be detected, including prompt neutrons and delayed-gamma rays using the fluorocarbon detector and delayed neutrons using a thermalized neutron detector.

In a second embodiment, shown in row 302, monoenergetic gamma rays are employed as the probing radiation to stimulate fissions and allow for the measurement of prompt neutrons, delayed neutrons and delayed-gamma rays.

In a third embodiment, shown in row 303, fast neutrons are generated from a charged-particle accelerator accelerating, for example deuterons impinging on deuterium target, generating high-energy neutrons to stimulate fission events. The fission events are detected via the resultant prompt neutrons from fast neutron fissions, thermal-neutron fissions, delayed-gamma rays and delayed neutrons also emitted as a result of the fission process.

In a fourth embodiment, shown in row 304, an x-ray source, such as a 9 MeV linac is employed to generate x-rays as well as neutrons via photoneutron conversion. Both radiation probes stimulate fission events in fissionable material, if present. The fission events are detected via the following signatures: prompt neutrons resulting from fast and thermal-neutron fissions, delayed-gamma rays and delayed neutrons. All emitted as a result of the fission process. The x-rays can serve also to provide high resolution x-ray radiography of the cargo.

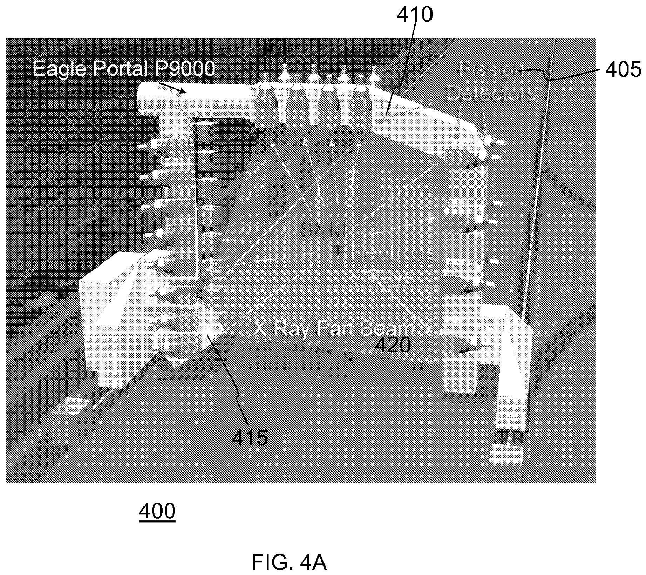

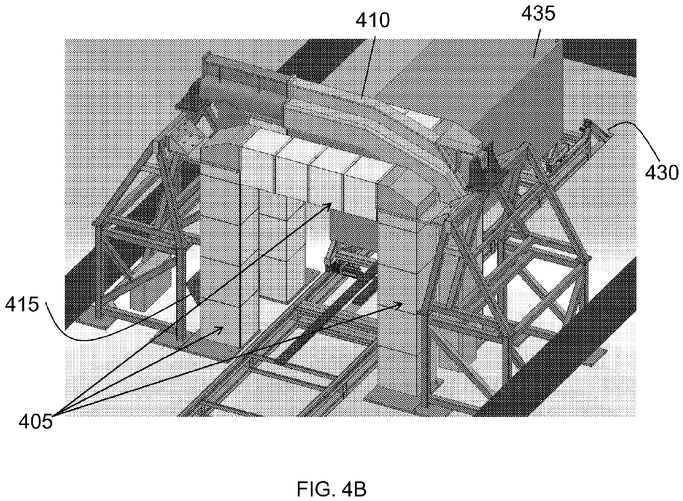

FIGS. 4A and 4B show how the high energy x-ray photo-fission multiple-signature-based system of the present invention is implemented. FIG. 4A is a conceptual illustration while FIG. 4B provides a three-dimensional rendering of a system, as built.

Referring to both FIGS. 4A and 4B simultaneously, system 400 comprises fission detectors 405, for detecting prompt neutrons and delayed-gamma rays, which are attached to the C-shaped X-ray detector housing 410. System 400 further comprises source 415 for producing radiation. In one embodiment, source 415 is a 9MeV linac and produces an X-ray fan beam. Further, system 400 may optionally comprise a conveyor 430 for translating a container or object under inspection 435 through the system.

System 400 is a two-tier inspection system, wherein for the first "basic scan", the container is completely and rapidly inspected using two independent co-linear radiography arrays, the primary array and the Z-spec transmission spectroscopy array. The primary array uses, in one embodiment, 544 cadmium tungstate (CdWO₄) detectors with conventional current mode readouts using photodiodes providing images with very high spatial resolution. The Z-spec array uses about one-fourth of that number of fast plastic scintillators with spectroscopic readouts using fast photomultiplier tubes.

Each of the independent radiography arrays are used to locate high-Z objects in the image, such as lead, tungsten and uranium, which would be potential shielding materials as well as the nuclear material itself. The methods of Z-spec transmission spectroscopy are described in co-pending United States Patent Application Number 13/033,590, also assigned to Applicant of the present invention, filed on February 23, 2011 and entitled "A High-Energy Spectroscopy-Based Inspection System and Methods to Determine the Atomic Number of Materials", which is herein incorporated by reference in its entirety.

The high-Z detection techniques cannot however, distinguish potential shielding materials such as lead or tungsten from nuclear material. Therefore, in one embodiment, the system and method of the present invention provides a second stage screening technique for discrimination of nuclear material. The second step of the inspection process is to inspect the location identified by the automated X-ray system as a possible alarm. This is done by a longer stationary direct scan of that location. In the direct scan, areas of the container image that were identified as high-Z are re-inspected by precisely repositioning the container to the location of the high-Z object and doing a stationary irradiation of the area with the X-ray beam. Since the X-ray beam has a continuous spectrum of X-rays with an endpoint of 9 MeV, some of the X-rays are above the energy required to cause photo-fission (approximately 6 MeV). SNM threats, as well as all fissionable materials will fission and produce fissions while in the X-ray beam. The system looks for one or more types of fission signatures to identify that fission is taking place. These can be prompt neutrons from the direct fission process and delayed-gamma rays from the decay of the fission products, as described in detail above. In one embodiment, system 400 uses two types of detectors in array 405: plastic scintillators and fluorine-based threshold-activation detectors in the form of fluorocarbon liquid scintillators. The plastic scintillators can detect delayed-gamma rays only. The fluorocarbon detectors can detect both delayed-gamma rays and prompt neutrons via the reaction ¹⁹F(n,α)¹⁶N, which has an effective threshold of 3MeV, and is thus insensitive to most source photoneutrons. Exceptions are beryllium and deuterium which can produce higher than 3MeV neutrons. Beryllium is a rare cargo that will cause neutron alarms but will have no accompanying delayed-gamma ray signature. The background from deuterium in normal hydrogenous materials is small.

As described above, the isotope ¹⁶N beta decays with a 7.1 second half-life. There are two major beta decay modes: 10.4 MeV endpoint (26%) and 4.3 MeV (68%). The detection of the prompt fission neutrons by the fluorocarbon detector is achieved by the close to 100% efficiency of the high-energy beta decay rather than the alpha particle in the (*n*, *α*) reaction which occurs during the X-ray pulse. The major advantage of detecting delayed-gamma rays and prompt neutrons using the fluorocarbon detector is that signals are delayed, relative to the fission event and the X-ray pulse. The X-ray pulse temporarily blinds the detectors but they recover between the pulses.

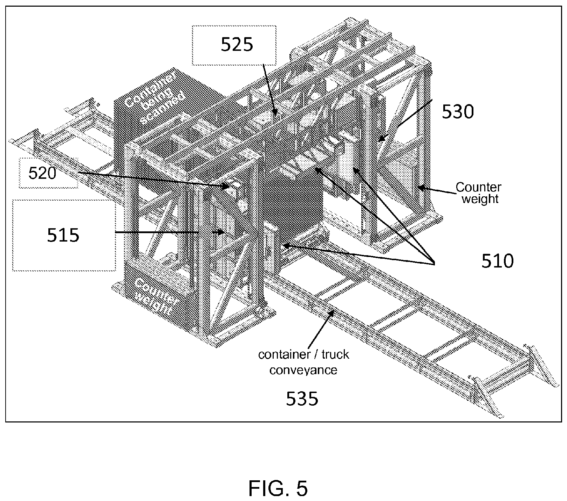

In another embodiment, x-ray photo-fission multiple signature-based system of the present invention is employed in a combined and simultaneous photo-neutron/x-ray inspection system, as shown in FIG. 5. A system that interrogates cargo simultaneously with neutrons and X-rays can, in principle, achieve high performance over the widest range of cargo types.

System 500 comprises a source 505, which, in one embodiment, is a 9MV linac. Neutrons are produced simultaneously with X-rays by the photonuclear interaction of the x-ray beam with a suitable converter. In one embodiment, a suitable converter is a D₂O converter built around the x-ray source, which uses a tungsten target. A total neutron yield on the order of 10¹¹ n/s is achieved with an average electron beam current of 100 µA. It should be noted herein that source 505 is movable. The prompt neutrons resulting from fission are detected in two independent detector systems: high efficiency DDAA detectors 510 and by direct detection of neutrons with energy >3 MeV using fluorine-based threshold-activation detectors 515, as described above. The delayed gamma-ray signals are measured with high efficiency using the same TAD and with additional lower cost plastic scintillators 525. Several NaI spectroscopic detectors are employed to detect the cargo neutron capture gamma ray spectra 520. The linac and array of additional plastic scintillator can be moved vertically 530 to scan or to aim better at the threat location.

In operation of system 500, a cargo container (or truck) is moved through a portal 525 using a conveyor mechanism 535. The X-ray source is pulsed typically at 30 to 300 pulses per second and produces high-energy x-rays. Photoneutron beams are generated by the same x-rays in a heavy water converter. If fissionable material is present in the cargo, fission is induced by the high-energy X-ray beam as well as by the photoneutrons. Typically, the photofission process dominates in hydrogenous cargos, while the neutron fission process dominates in dense metallic cargos.

The above examples are merely illustrative of the many applications of the system of present invention. Although only a few embodiments of the present invention have been described herein, it should be understood that the present invention might be embodied in many other specific forms without departing from the spirit or scope of the invention. Therefore, the present examples and embodiments are to be considered as illustrative and not restrictive, and the invention may be modified within the scope of the appended claims.

The following clauses set out a number of non-limiting aspects of the invention:
1. A system for measuring a plurality of fission signatures, comprising:
   a radiation source, wherein said radiation source is configured to produce radiation and direct said radiation towards an object under inspection, wherein said radiation induces fission in any nuclear material that may be present in the object;
   a first detector wherein said first detector type is at least one of a threshold-activation detector, a plastic scintillator detector, a moderated He-3 detector, or a He-3 equivalent replacement detector; and
   a second detector wherein said second detector type is at least one of a threshold- activation detector, a plastic scintillator detector, a moderated He-3 detector, or a He-3 equivalent replacement detector.
2. The system of clause 1 wherein said first detector and said second detector are positioned on opposing sides of the object.
3. The system of clause 2 wherein one of said first detector or said second detector is positioned to detect radiation that is emitted from the object at back angles relative to the radiation produced by the radiation source.
4. The system of clause 1 wherein said first detector is positioned above the object.
5. The system of clause 4 wherein said second detector is positioned on a side of the object.
6. The system of clause 1 wherein said first detector is positioned below the object.
7. The system of clause 6 wherein said second detector is positioned on a side of the object.
8. The system of clause 1 wherein the radiation source is a linac having an energy in the range of 6 MeV to 9 MeV.
9. The system of clause 1 further comprising a neutron -inducing material positioned between the radiation source and the object, wherein said neutron-inducing material converts some of the radiation emanating from the radiation source into a neutron source.
10. The system of clause 9 wherein said neutron source has an energy of approximately 2.5 MeV.
11. The system of clause 9 wherein said neutron-inducing material is heavy water or beryllium.
12. The system of clause 1 wherein said radiation is at least one of X-rays, monoenergetic gamma rays, or gamma rays with a narrow energy band.
13. The system of clause 1 wherein the threshold-activation detector comprises at least one neutron threshold-activation material for detecting higher energy prompt fission neutrons.
14. The system of clause 13 wherein said at least one neutron threshold-activation material includes at least one fluorine-containing compound.
15. The system of clause 1 wherein said plurality of fission signatures includes at least one of fission prompt neutrons, delayed-gamma rays, or delayed neutrons.
16. The system of clause 1 further comprising an X-ray radiation source and transmission detectors for interrogating the object with X-rays and detecting X-rays transmitted through the object.
17. A inspection system for measuring a plurality of fission signatures, comprising:
   a radiation source, wherein said radiation source produces radiation directed towards an object under inspection and induces fission in any nuclear material that may be present in the object; and
   a threshold-activation detector, comprising at least one threshold-activation material wherein said threshold-activation material is also a scintillant and at least one detector for detecting beta radiation resulting from activation of the threshold-activation material by prompt fission neutrons.
18. The inspection system of clause 17 wherein the threshold-activation material or scintillant comprises fluorine-containing compounds.
19. The inspection system of clause 18 wherein the fluorine-containing compounds comprise a liquid fluorocarbon.
20. The inspection system of clause 17 wherein the threshold-activation detector comprises one large area detector.
21. The inspection system of clause 17 wherein the threshold-activation detector comprises a plurality of detector tiles, wherein said plurality of detector tiles is configured in combination to function as a large area detector.

## Claims

1. A inspection system for measuring a plurality of fission signatures, comprising:
a radiation source, wherein said radiation source produces radiation directed towards an object under inspection and induces fission in any nuclear material that may be present in the object; and
a threshold-activation detector, comprising at least one threshold-activation material wherein said threshold-activation material is also a scintillant and at least one detector for detecting beta radiation resulting from activation of the threshold-activation material by prompt fission neutrons.

2. The inspection system of claim 1 wherein the threshold-activation material or scintillant comprises fluorine-containing compounds.

3. The inspection system of claim 2 wherein the fluorine-containing compounds comprise a liquid fluorocarbon.

4. The inspection system of claim 1 wherein the threshold-activation detector comprises one large area detector.

5. The inspection system of claim 1 wherein the threshold-activation detector comprises a plurality of detector tiles, wherein said plurality of detector tiles is configured in combination to function as a large area detector.
